# EUROPÄISCHE PATENTSCHRIFT

(11) **EP 0 501 947 B1**
(45) Veröffentlichungstag und Bekanntmachung des Hinweises auf die Patenterteilung: **14.06.1995**
(21) Anmeldenummer: 92890046.3
(22) Anmeldetag: 25.02.1992
(51) Int. Cl.: G01C 7/06

(54) **Verfahren zur Messung von Querschnitten eines Hohlraumes**
Method of measuring the cross sections of a cavity
Méthode pour mesurer les coupes en travers d'une cavité

(30) Priorität: 27.02.1991 AT 409/91
(43) Veröffentlichungstag der Anmeldung: 02.09.1992
(73) Patentinhaber: Hornyik, Andreas, Dipl.-Ing., A-2500 Baden (AT)
(72) Erfinder: Hornyik, Andreas, Dipl.-Ing., A-2500 Baden (AT)
(74) Vertreter: Gibler, Ferdinand, Dipl.Ing. Dr. techn.

(56) Entgegenhaltungen:
- EP-A- 0 320 461
- FR-A- 1 151 168
- GB-A- 2 095 720
- US-A- 3 484 136

## Beschreibung

Die Erfindung betrifft ein Verfahren zur Vermessung eines Hohlraumes in der Art eines Tunnels, Stollens oder dergleichen, wobei eine Lichtebene erzeugt und deren Reflexionen an den Wänden des Hohlraumes von einer auf die Lichtebene gerichteten und ortsfest gegenüber dieser angeordneten Kamera aufgezeichnet werden und eine Vorrichtung zur Durchführung des Verfahrens.

Verfahren zum Vermessen von Hohlräumen, insbesonders Stollen und Röhren sind an sich bekannt. Diese bekannten Verfahren verursachen jedoch meist einen sehr hohen Arbeits- und Zeitaufwand und liefern darüberhinaus auch nur eine unvollständige Darstellung des gewünschten Profiles.

Die Vermessung der Profile kann trigonometrisch oder photogrammetrisch mittels Lichtschnittverfahrens erfolgen.

Beispielsweise zeigt die EP-A1 0 078 179 ein Verfahren zur photographischen Profilerfassung eines Tunnels. Dabei wird mit Hilfe eines in einem Gehäuse angeordneten Ringblitzes und Halogenlampen eine Lichtebene erzeugt, indem das Gehäuse eine innere und eine mit dieser coplanar angeordnete äußere Schlitzöffnung aufweist, durch welche Öffnungen der Lichtaustritt erfolgt. Die so an den zu vermessenden Wänden erzeugte Profilebene wird photographiert, digitalisiert und anschließend ausgewertet.

Die GB-PS 2 094 470 zeigt ein Verfahren zur Ermittlung von Oberflächenprofilen, wobei ein von einem Laser erzeugter Lichtstrahl von einem rotierenden Spiegel oder einem mit regelmäßigen Winkelflächen versehenen Körper an die zu vermessende Wand geworfen wird. Sämtliche zur Erzeugung notwendigen Einrichtungen sind auf einem Wagen aufgebaut. Die erzeugte Profilebene wird von einer Kamera aufgenommen, deren Linsenachse parallel zur Längsachse der Bohrung verläuft. Die Vermessung des vom Wagen durchlaufenen Weges erfolgt über einen mit am Wagen angeordneten Referenzöffnungen zusammenwirkenden Referenzlaser. Aus dieser Schrift ist es somit bekannt, eine Kamera auf einem in Achsrichtung der Bohrung bewegbaren Wagen mit einer Tragfläche und mindestens je einem Vorder- und Hinterrad anzuordnen.

Aus der DE-PS 946 925 ist eine Anordnung zur Aufnahme von ringförmig geschlossenen Innenprofilen mit einer Beleuchtungsvorrichtung und einer fotografischen Kamera bekannt, welche nach dem Lichtschnittverfahren arbeitet. Die Beleuchtungsvorrichtung ist in einem Gehäuse angeordnet, wobei sich die punktförmige Lichtquelle im Brennpunkt einer ringförmigen Fresnellinse befindet. Über dieses System wird ein Lichtschleier erzeugt, dessen von den Wänden reflektierte Strahlen von der Kamera aufgenommen werden. Zur Erstellung unterschiedlicher Profile wird die Beleuchtungsvorrichtung verschoben. Dies führt unweigerlich zu unterschiedlichen Maßstäben der Profile. Die damit autretenden Verzerrungen erschweren das nachträgliche Auswerten.

Auch die DD-PS 263 670 zeigt eine Vorrichtung zum Herstellen von Lichtschnitten. Die Erfindung verwendet dabei zwei in geringem Anstand parallel zueinander angeordnete Platten und ein Blitzlichtgerät zum Erzeugen von gerichtetem Licht, sowie eine Kamera. Weiters wird ein parallel zur Meßlinie gerichteter Lichtstrahl verwendet, der von der Kamera kommend, auf einen mit einem schwarzmattierten Kreuz versehenen Spiegel, der dadurch in 4 Teile geteilt ist auftrifft. Bei mittiger Anordnung der Kamera zum Lichtschnittgerät tritt eine gleichmäßige Erhellung aller Teilflächen ein und das zwischen den Platten angeordnete Blitzgerät als auch der Kameraverschluß werden aktiviert. Auch bei dieser Vorrichtung wird, wie auch schon bei den zuvor genannten, ein Lichtband erzeugt, welches eine ringförmige Beleuchtung entsprechender Breite eines zu vermessenden Hohlraumes erzeugt. Solcherart erzeugte Einzelprofile lassen keine Informationen über die Form und Größe eines Stollens zwischen den gemessenen einzelnen Profilen zu.

Weiters ist in der FR-A-1 151 168 ein Verfahren zur photograhischen Vermessung von Stollenprofilen beschrieben, bei dem der Stollen durch ein halbkugelförmiges Lichtbündel so beleuchtet wird, daß dadurch eine Licht-Schnittebene quer zur Stollenachse definiert ist. Das Stollenprofil zeichnet sich dabei als scharfe Linie ohne Halbschatten zwischen dem erhellten Teil und der Schattenzone der Stollenwand ab.

Die GB-A-2 095 720 offenbart eine Vorrichtung zum Graben eines Tunnels, welche eine entlang der zentralen Längsachse der Vorrichtung gerichtete Laser-Lichtquelle und eine weitere entlang der gewünschten Tunnelachse gerichtete Laser-Lichtquelle als Referenzstrahl umfaßt. Weiters sind zwei voneinander beabstandete Zielscheiben mit einem kartesischen Maßstab in einem Rohr unmittelbar hinter der Grabvorrichtung angeordnet. Jede Zielscheibe ist mit dem Ursprung seines Koordinatensystems in der zentralen Längsachse des Rohres angeordnet. Die Verschiebungen der auf den Zielscheiben auftreffenden Strahlen der zwei Laser-Lichtquellen werden mit Hilfe des Maßstabes gemessen und daraus die Winkel- und Transversalabweichungen der Vorrichtung und des Rohres relativ zur gewünschten Achse des Tunnels errechnet.

Bekannterweise werden die unterschiedlich erzeugten Profilebenen mit Kameras aufgenommen und können bei Kenntnis des Maßstabes und unter Voraussetzung der Parallelität der Bildebene mit der Profilebene direkt am Photo gemessen werden.

Grundsätzlich werden bei den bekannten Verfahren jedoch nur einzelne Profile bestimmt, wobei die Ermittlung der Lage der Profile zueinander umständlich und zeitaufwendig ist. Besonders nachteilig ist ein derart zeitaufweniger Vorgang insbesonders deshalb, weil wegen der räumlichen Enge, dem Schmutz und der Dämpfe in dem zu vermessenden Stollen ein längeres Arbeiten meist schwierig und vor allem gesundheitsgefährdend ist.

Da die einzelnen Profile vor Ort ausgewählt werden müssen, ist in den engen Kanälen natürlich auch keine optimale Auswahl möglich.

Sollte das Ergebnis der gemessenen Profile schlußendlich unbefriedigend sein, können nachträgliche Profile wiederum nur mit neuerlichem großen Aufwand gemessen werden.

Weiters werden mit den bekannten Verfahren Unregelmäßigkeiten im Achsverlauf und der Verformung des Kanals zwischen den gemessenen Profilen nicht erfaßt.

Gute räumliche Stollenmodelle benötigen sehr viele Profile, um das Modell verhältnismäßig naturgetreu darzustellen, und sind daher finanziell sehr aufwendig. Trotz einer großen Anzahl von Profilen werden Beschädigungen des Kanals mit den genannten Methoden weder visuell dokumentiert noch erfaßt.

Aufgabe der Erfindung ist es daher, die oben genannten Nachteile zu vermeiden und ein Verfahren zu schaffen, welches die Realisierung eines vollständigen 3-dimensionalen Modells des Stollens bzw. der Röhre, insbesondere unter zeitlicher Reduktion des Meßvorganges im Stollen bzw. der Röhre ermöglicht.

Weiters muß eine lückenlose Aufnahme des Innenraumes in Lage und Höhe durchgeführt werden können, wobei die gesamten Messungen dokumentiert, jederzeit abrufbar und wiederholbar sein müssen.

Eine Aufgabe der Erfindung liegt damit auch darin, daß ein lückenloser digitaler Datenfluß geschaffen werden soll, um Fehler zu vermeiden und die Berechnungen zu beschleunigen.

Einzelne Querprofile sollen auf Wunsch auch nachträglich außerhalb des zu vermessenden Stollens ausgewählt werden können.

Die Erfindung macht es sich auch zur Aufgabe,das Modell einer Röhre bzw. eines Stollens mit Hilfe eines einzigen Meßvorganges kostengünstig zu schaffen.

Die Erfindung löst die Aufgabe dadurch, daß bei einem Verfahren der eingangs genannten Art die eine Profilebene definierende Lichtebene coplanar zu einer Fläche abgestrahlt und zusätzlich der sich von der Profilebene in Richtung Kamera erstreckende Hohlraum ausgeleuchtet wird, daß ein den Weg fortschreitender Messungen bestimmender Referenzstrahl, vorzugsweise ein Laserstrahl, verwendet wird, der an der Fläche einen Referenzpunkt liefert, daß die Entfernung der Lichtebene von einem vorbestimmten Ausgangspunkt, vorzugsweise der Quelle des Referenzstrahles, ständig über eine Zähleinrichtung und in vorgewählten Abständen über ein Distanzmeßgerät gemessen wird, und daß die Lichtebene, der Referenzpunkt, ein Lot, ein Maßstab zur Bestimmung des Bildmaßstabes, sowie die Zähleinrichtung gleichzeitig von der Kamera aufgezeichnet werden.

Bei einer vorteilhaften Ausgestaltung der Erfindung wird im Bereich der Fläche eine lotrechte Markierung angeordnet und von der Kamera aufgezeichnet.

Vorteilhaft kann auch die Lichtebene während der Aufzeichnung entlang der Längsachse des zu vermessenden Hohlraumes bewegt werden und die Bewegung der Lichtebene entlang der Längsachse des zu vermessenden Hohlraumes in bestimmbaren Zeitabständen unterbrochen und die Stellung des Lichtbündels gegenüber dem vorbestimmten Ausgangspunkt vermessen werden.

Die Erfindung betrifft weiters eine Vorrichtung zur Durchführung des erfindungsgemäßen Verfahrens zur Vermessung von Querschnitten eines Hohlraumes in der Art eines Tunnels, Stollens oder dergleichen, mit einer Lichtschnitteinrichtung aus mindestens einer Platte und mindestens einer Lichtquelle sowie einer auf die Platte gerichteten Kamera, und stellt sich die Aufgabe, eine einfach aufgebaute und kostengünstige Vorrichtung zum Vermessen des Querschnittes eines Hohlraumes nach dem erfindungsgemäßen Verfahren zu schaffen.

Erfindungsgemäß wird die Aufgabe mit einer solchen Vorrichtung dadurch gelöst, daß sowohl die Platte als auch die Kamera, vorzugsweise eine Videokamera, auf einem in Achsrichtung des Hohlraumes bewegbaren Wagen mit einer Tragfläche und mindestens je einem Vorder- und Hinterrad angeordnet sind, daß die Lichtquelle in einer Öffnung der Platte angeordnet und auf die Kamera gerichtet ist, daß die Lichtquelle an der der Kamera abgeneigten Fläche der Platte lichtdicht abgedeckt ist, daß eine im Stollen angeordnete weitere Lichtquelle zur Erzeugung eines auf die Platte gerichteten Referenzstrahles vorgesehen ist, daß die Platte mit einem Lot und einem Maßstab versehen ist, und daß am Wagen im Bereich der Platte eine Wegstreckenmeßeinrichtung vorgesehen ist.

Vorteilhaft ist die Wendel der Lichtquelle in der Ebene einer Plattenoberfläche angeordnet.

Nach einem weiteren Ausführungsbeispiel der Erfindung ist die Tragfläche ein die Kamera und die Platte fest miteinander verbindendes Gestänge.

Das Lot kann ein elektronisches Lot sein und an der der Kamera zugewandten Plattenseite ein Maßstab angeordnet sein.

Nach einem weiteren Ausführungsbeispiel ist die Platte aus transparentem oder durchscheinendem Material, vorzugsweise Kunststoff.

Weitere Ausgestaltungen sind dadurch gekennzeichnet, daß in der Platte mehrere gegen die Kamera gerichtete Lichtquellen angeordnet sind, daß die Längenmeßeinrichtung eine am Vorderrad des Wagens angeordnete Zähleinrichtung ist, und daß der Wagen mit einem separaten Zählrad versehen ist.

Die Platte kann am Wagen auch über eine Kippvorrichtung kippbar angeordnet sein. Diese Ausführungsform ist insbesonders dann vorteilhaft, wenn aus der Stollenwand ragende Hindernisse umgangen werden müssen.

Die Erfindung wird nun anhand eines Ausführungsbeispieles unter Zuhilfenahme der angeschlossenen Zeichnung näher beschrieben.

Es zeigt:
Fig.1 einen Längsschnitt durch das Ausführungsbeispiel der erfindungsgemäßen Vorrichtung;
Fig.2 einen Schnitt entlang der Linie II-II der Fig.1;
Fig.3 einen Schnitt entlang der Linie III-III in der Fig.1;
Fig.4 einen Schnitt entlang der Linie IV-IV in der Fig.1;
Fig.5 ein Videobild des zu vermessenden Stollens;und
Fig.6 eine schematische Darstellung betreffend die Bestimmung der Wagenachse.

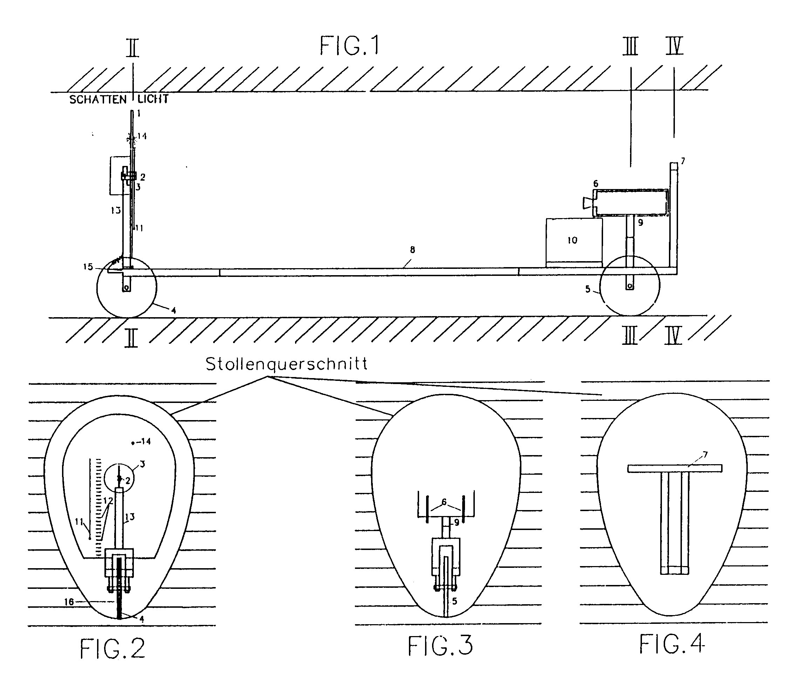

Fig.1 zeigt den in einem Stollen angeordneten fahrbaren Wagen. An den einander entgegengesetzten Enden des Wagens ist einerseits eine über eine Halterung 9 fest mit dem Wagen verbundene Videokamera und anderseits die zur Erzeugung einer Profilebene notwendige Platte 1 angeordnet. Die Definition der Profilebene erfolgt mit normalem Licht.

Um eine Bewertung des Kanalzustandes durchführen zu können, genügt es nicht, ein Lichtband an der Stollenwand zu erzeugen, sondern es muß dazu ein Teil des Stollens beleuchtet sein. Die Definition der Profilebene erfolgt somit an einem klaren Licht-Schatten-Übergang vom beleuchteten zum unbeleuchteten Stollenabschnitt.

Die Platte 1 weist dazu eine vorzugsweise in ihrem Zentrum vorgesehene Öffnung 3 auf, in welcher eine Lampe 2 derart angeordnet ist, daß die Ebene einer Plattenoberfläche gleich der Ebene des Licht-Schatten-Überganges ist und der Halbschatten somit minimiert wird. Dies wird beispielsweise dadurch erzielt, daß die Wendel der Lampe 2 exakt in der Plattenebene liegt. Zur anderen Plattenebene, jener von der Kamera abgewandten, ist die Lampe lichtdicht abgeschirmt. Dadurch wird der zu vermessende Stollen in einen hellen und einen dunklen Teil getrennt, wobei die Trennungslinie scharf begrenzt ist und sich in einer Ebene mit der Lichtquelle befindet. Die so erzeugte Lichtebene bildet also die für die Messung interessante Profilebene.

Selbstverständlich ist es auch möglich, insbesondere bei großen Stollen, mehrere Lichtquellen 2 zu verwenden, welche in über die Platte 1 verteilten Öffnungen 3 angeordnet sind.

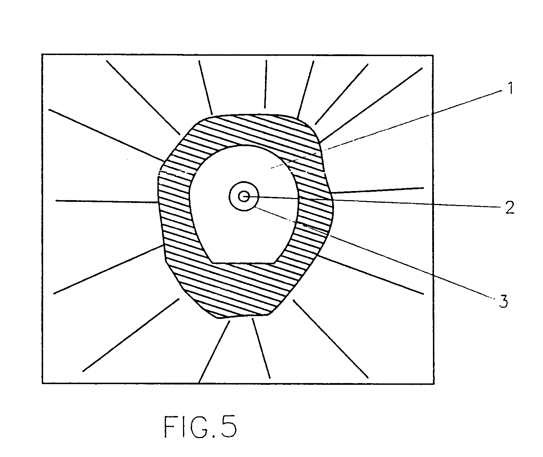

Auf dem Videobild (Fig.5) zeigt sich dabei, vom Zentrum nach außen zu betrachtet, die die Meßebene erzeugende Platte 1 mit der Lampe 2 und der Öffnung 3, ein dunkler Bereich, der den Stollen hinter der Ebene charakterisiert und der vordere helle Teil des Stollens.

Indem die Platte 1 mit der Lichtquelle 2 und die Videokamera (6) mit dem Wagen fest verbunden sind, bleibt über die Gesamtdauer der Vermessung der Abstand Meßebene-Kamera konstant. Die Parallelität Bildebene-Meßebene vorausgesetzt ist somit ein konstanter Bildmaßstab gewährleistet.

Wird der Wagen nun den Stollen entlanggefahren, so soll die Fahrgeschwindigkeit 25 cm/sek nicht überschreiten. Bei dieser Geschwindigkeit wird jeweils 1 Profil/cm aufgenommen. Die digitalen Videobilder können in einen PC eingespielt und direkt verarbeitet werden. Dadurch ist ein lückenloser Datenfluß gewährleistet.

Zufolge der digitalen Aufzeichnung können einzelne, beliebig auswählbare Profile durch Stoppen des Videobandes ausgewählt werden. Die Profile können auch nachträglich außerhalb des Stollens ohne neuerlichen Meßvorgang ausgewertet werden.

Die einzelnen festgestellten Profilebenen müssen nun zusammengefügt und in ein übergeordnetes System transformiert werden, da erst die richtige Aneinanderreihung der einzelnen Profile ein vollständiges und richtiges dreidimensionales Abbild des vermessen Hohlraumes ergibt.

Um die jeweilige Lage der Profilebene im Raum festzustellen, verwendet man einen von einem Laser ausgesandten Referenzstrahl, der auf der Platte 1 einen Referenzpunkt 14 bildet, welcher von der Videokamera aufgezeichnet wird. Weiters ist es notwendig, in der Profilebene ein Lot, vorzugsweise ein elektronisches Lot anzuordnen.

Zur Festlegung der kartesischen Koordinaten des Referenzpunktes 14 wird ein Theodolit im Kanal beispielsweise unter einem Kanalschacht angeordnet. Die Lagekoordinaten x,y dieses Theodoliten werden vom vertikalen Kanalschacht aus von der Straße hinabgelotet, d.h. der Kanaldeckel wird im Landessystem eingemessen. Die Höhe des derart angeordneten Theodoliten wird vom Kanaldeckel aus mit Hilfe eines Maßbandes bestimmt. Von einem zweiten vertikalen Kanalschacht aus, welcher eine unterirdische Sichtverbindung zum plazierten Theodoliten hat, wird nun ebenfalls ein Lot angeordnet und mir dem Theodoliten eingemessen.

Da die Koordinaten des Theodoliten und die des zweiten Lotes bekannt sind, erhält man eine definierte Horizontalrichtung bezüglich des Landeskoordinatensystemes. Die Vertikalrichtung bezüglich der Lotrechten ist bekannt.

Die so eingemessenen Richtungen sollten während der gesamten Messung nicht mehr verändert werden.

Der zur Erzeugung des Referenzstrahles notwenige Laser 17 als auch ein Distanzmeßgerät für den zurückgelegten Weg der Profilebene werden am Theodoliten angeordnet. Der Referenzstrahl repräsentiert die gemessene Richtung zwischen dem Theodoliten und dem zweiten Lot. Die Distanz wird immer parallel zum Laserstrahl und mit Hilfe eines Distanzmeßgerätes gemessen, welches keinen Reflektor am Ziel benötigt.

Die Platte 1 kann aus transparentem, durchscheinendem oder auch undurchsichtigem Kunststoff sein.

Ist sie aus transparentem oder durchscheinendem Material, so muß sie zwischen dem Theodoliten, und damit der Laserquelle und der Kamera liegen. Ist sie jedoch aus undurchsichtigem Material, so muß die Kamera in diesem Fall zwischen der Laserquelle und der Platte liegen.

Diese unterschiedlichen Anordnungen sind deshalb von Bedeutung, weil der Referenzstrahl über die Dauer der gesamten Messung auf die Platte zeigen muß, um den für die Auswertung der Position der Profilebene notwendigen Referenzpunkt ständig zu erzeugen. Dieser durch den Laser auf die Platte projizierte rote Punkt muß auf der der Kamera zugeordneten Seite der Platte ständig sichtbar sein.

Der Referenzpunkt hat bei bekannter Distanz vom Theodoliten zur Platte Landeskoordinaten.

Zur Distanzmessung ist am Vorderrad 4 des Wagens beispielsweise ein Maßstab 16 aufgetragen. Es kann aber auch eine über Zahnräder mit dem Vorderrad verbundene Zähleinrichtung, beispielsweise eine elektronische Zähleinrichtung angeordnet sein.

Diese Zähleinrichtung wird während der Aufnahme mitgefilmt.

Zur genaueren Besimmung der Distanz zwischen Theodoliten, und damit der Laserquelle, und der Platte wird der Wagen in vorbestimmten Abständen, vorzugsweise alle 2 m angehalten und die Distanz genau vermessen.

Zur weiteren Bestimmung der Lage der Profilebene wird auch die Veränderung des projizierten Referenzpunktes in Bezug zur Wagenlängsachse direkt am Videobild gemessen.

Es muß auch die Geometrie des Wagens vermessen werden, wobei der durch das Lot richtungsmäßig festgelegte vertikale Abstand des Referenzpunktes zum Auflagepunkt des Vorderrades am Untergrund festgestellt wird. Dies geschieht ebenfalls am Videobild.

Der in Fig.1 dargestellte Wagen ist wegen der besonderen Querschnittsform des zu vermessenden Kanals einspurig ausgeführt. Er umfaßt ein die Videokamera 6 und die Platte 1 fest miteinander verbindendes Gestänge 8, an welchem die Platte 1 zusammen mit der Lichtquelle 2 mittels einer Stütze 13 angeordnet sind. Die Kunststoffplatte umfaßt weiters ein Lot 11 und einen auf ihr aufgetragenen Maßstab 12. Exakt unter der Platte 1 ist die Achse des Vorderrades 4 angeordnet. Der über eine Halterung 9 mit dem Wagen fest verbundenen Videokamera ist eine Batterie 10 zugeordnet. Am Ende des Wagens ist noch ein Gestänge 7 vorgesehen, um den Wagen gegebenenfalls händisch schieben zu können. Wird beispielsweise in Stollen gearbeitet, bei welchen Vorsprünge aus der Stollenwand zu erwarten sind, so kann die die Platte 1 tragende Stütze mit der als Gestänge ausgebildeten Tragfläche 8 des Wagens uber einen Klappmechanismus verbunden sein, um die Platte 1 wegklappen zu können. Die Videokamera muß so angeordnet sein, daß sie das gesamte erzeugte Licht-Schatten-Profil und folgende Einrichtungen erfassen kann:

Die Platte 1 mit projiziertem Referenzpunkt 14; Den Maßstab 12 zur Bestimmung des Bildmaßstabes auf der Platte 1;

Das Vorderrad 4 mit dem Maßstab 16 zur Distanzmessung zwischen den vorzugsweise alle 2 m durchgeführten Halten des Wagens. Die Achse des Vorderades 4 sollte der Einfachheit halber, wie bereits erwähnt, in der Profilebene liegen. Dadurch kann der Berührpunkt des Vorderrades mit der Kanalsohle, weicher sich ja ebenfalls in der Profilebene befindet, relativ zum Referenzpunkt 14 einfach am Bildschirm eines PC bestimmt werden.

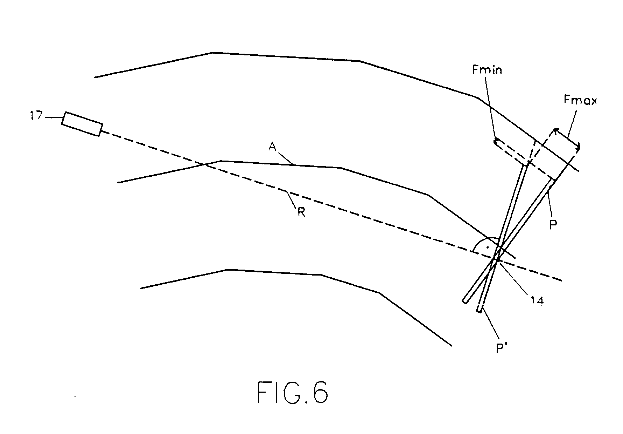

Für die Bestimmung der Richtung des bewegten Wagens wird in 1. Näherung angenommen, daß die Profilebene P normal zur Richtung des Referenzstrahles R liegt. Unter dieser Annahme wird ein vorläufiger Achspunkt (Berührpunkt des Vorderrades mit der Kanalsohle) berechnet. Dieser in 1. Näherung berechnete Achspunkt ist mit Ungenauigkeiten derart behaftet, daß in Richtung der Kanalachse A ein Fehlermaximum Fₘₐₓ und normal dazu ein Fehlerminimum Fₘᵢₙ auftritt. Die tatsächliche Lage des Profilebene ist mit P′ gekennzeichnet(siehe Fig.6).

Wird der Wagen nun solange weitergeschoben, Dis sich das Hinterrad 5 an jener Stelle befindet, an der zuerst das Vorderrad 4 war, kann eine weitere Messung für das Vorderrad vorgenommen und anschließend die Richtung der Längsachse des Wagens exakt berechnet werden. Die exakte Feststellung der Richtung resultiert aus der Tatsache, daß, wie oben erwähnt, die Ungenauigkeit der vorläufigen Wegpunkte in Richtung des Referenzstrahles ein Maximum und normal dazu ein Minimum wird.

Durch die Anordnung der Kamera und der Platte zueinander entspricht die Normale der Profilebene P der optischen Achse der Kamera, welche wiederum gleich mit der Längsachse des Wagens liegt.

Um die genaue Lage der Position des Hinterrades 5 berechnen zu können, muß gewährleistet sein, daß das Hinterrad ungefähr in der Bahn des Vorderrades fährt und somit den gleichen Weg zurücklegt.

Dies ist beispielsweise bei Kanälen mit Eiprofil, deren Sohle sehr eng ist, gewährleistet.

Abweichungen des Hinterrades aus der Spur des Vorderrades um beispielsweise +-5 cm ergeben bereits einen Fehler der Koordinaten eines Punktes an der Stollenwand von ca. 1 cm in Richtung des Referenzstrahles.

Bei größeren Stollenquerschnitten muß der Wagen entweder geradeaus oder in Kurven mit gleichen Radien fahren, wobei fur den zweiten Fall die Schleppkurve des Hinterrades berechnet werden kann.

Bei der Auswertung der Aufzeichnung kann die am Vorderrad abgegriffene, zurückgelegte relative Distanz zwischen den Haltepunkten natürlich nicht direkt am Laserstrahl aufgetragen werden, da der Weg im allgemeinen krumm ist. Die Position des Vorderrades entlang eines krummen Weges wird mit Hilfe eines iterativen Prozesses ermittelt, wobei logischerweise die Genauigkeit der Koordinaten des Referenzpunktes 14 mit der Anzahl der ermittelten Wegpunkte verbessert wird. Bei geradliniger Bewegung des Wagens kann dieser iterative Prozeß entfallen, da die Richtung der Wagenachse immer gleich und bereits nach 2 Messungen bekannt ist.

Zur Berechnung der erforderlichen Parameter wird zuerst die Kanalachse bei den Haltepunkten bestimmt. Am Videobild wird das erste Profil, welches sich gleichzeitig im ersten Haltepunkt befindet, abgenommen. An diesem Haltepunkt wurde die genaue Distanz zwischen Theodolit und Platte bestimmt. Das Profil wird normal zum Referenzstrahl stehend angenommen und ein vorläufiger Achspunkt berechnet. Diese Vorgangsweise wird über mehrere Haltepunkte durchgeführt. Ist der Abstand der Haltepunkte gleich dem Achsabstand des Wagens, ist beim nächsten Haltepunkt bereits eine relativ genaue Position des Hinterrades bekannt.

Mit Hilfe der Koordinaten des Referenzpunktes und der ermittelten Position der Räder kann eine relativ exakte Kanalachse A ermittelt werden, wobei diese Achse aus einem angenäherten Achspunkt des ersten Haltepunktes und dem genauen Achspunkt des zweiten Haltepunktes besteht. Mit jedem weiteren Haltepunkt wird ein neuer, genauer Achspunkt errechnet. Der Grund dafür, warum der zweite und jeder weitere Achspunkt präzise sind liegt darin, daß die Richtung des Wagens im Raum zufolge der minimalen Fehler normal zur Kanalachse nur mit geringen Fehlern behaftet ist, und daß die maximalen Fehler in Richtung der Kanalachse A durch die genaue Position des Haltepunktes aufgehoben werden.

Tatsächlich erfolgt die Bestimmung der Kanalachse A mit Hilfe eines iterativen Prozesses, wobei der am Vorderrad 4 abgegriffene Weg auf der vorläufigen Kanalachse aufgetragen und mit der Position des Hinterrades 5 eine vorläufige Wagenrichtung und ein vorläufiger Achspunkt bestimmt werden.

Mit diesem ermittelten Achspunkt wird die Kanalachse verbessert. Anschließend wird die Berechnung wiederholt.

Die Abstände in der Profilebene werden mit einem CAD-Programm gemessen und die genauen baten der Lage der Profilebene P mit einem Programm berechnet.

Mit diesen Daten wird das Profil anschließend direkt am Bildschirm digitalisiert.

## Patentansprüche

1. Verfahren zur Vermessung von Querschnitten eines Hohlraumes in der Art eines Tunnels, Stollens oder dergleichen, wobei eine Lichtebene erzeugt und deren Reflexionen an den Wänden des Hohlraumes von einer auf die Lichtebene gerichteten und ortsfest gegenüber dieser angeordneten Kamera (6) aufgezeichnet werden, dadurch gekennzeichnet, daß die eine Profilebene definierende Lichtebene coplanar zu einer Fläche (1) abgestrahlt und zusätzlich der sich von der Profilebene in Richtung Kamera (6) erstreckende Hohlraum ausgeleuchtet wird, daß ein den Weg fortschreitender Messungen bestimmender Referenzstrahl, vorzugsweise ein Laserstrahl, verwendet wird, der an der Fläche (1) einen Referenzpunkt (14) liefert, daß die Entfernung der Lichtebene von einem vorbestimmten Ausgangspunkt, vorzugsweise der Quelle (17) des Referenzstrahles, ständig über eine Zähleinrichtung (16) und in vorgewählten Abständen über ein Distanzmeßgerät gemessen wird, und daß die Lichtebene, der Referenzpunkt (14), ein Lot (11), ein Maßstab (12) zur Bestimmung des Bildmaßstabes, sowie die Zähleinrichtung gleichzeitig von der Kamera (6) aufgezeichnet werden.

2. Verfahren nach Anspruch 1, dadurch gekennzeichnet, daß im Bereich der Fläche (1) eine lotrechte Markierung (11) angeordnet und diese von der Kamera aufgezeichnet wird.

3. Verfahren nach Anspruch 1, dadurch gekennzeichnet, daß die Lichtebene während der Aufzeichnung entlang der Längsachse (A) des zu vermessenden Hohlraumes bewegt wird.

4. Verfahren nach den Ansprüchen 1 und 3, dadurch gekennzeichnet, daß das Verschieben der Lichtebene in verschiedenen Zeitabständen unterbrochen und die Stellung der Lichtebene gegenüber einem vorbestimmten Ausgangspunkt genau vermessen wird.

5. Vorrichtung zur Durchführung des Verfahrens nach einem der Ansprüche 1-4, mit einer Lichtschnitteinrichtung aus mindestens einer Platte (1) und mindestens einer Lichtquelle (2) sowie einer auf die Platte (1) gerichteten Kamera (6), dadurch gekennzeichnet, daß sowohl die Platte (1) als auch die Kamera (6), vorzugsweise eine Videokamera, auf einem in Achsrichtung (A) des Hohlraumes bewegbaren Wagen mit einer Tragfläche (8) und mindestens je einem Vorder- und Hinterrad (4,5) angeordnet sind, daß die Lichtquelle (2) in einer Öffnung (3) der Platte (1) angeordnet und auf die Kamera (6) gerichtet ist, daß die Lichtquelle (2) an der der Kamera (6) abgeneigten Fläche der Platte (1) lichtdicht abgedeckt ist, daß eine im Stollen angeordnete weitere Lichtquelle (17) zur Erzeugung eines auf die Platte (1) gerichteten Referenzstrahles vorgesehen ist, daß die Platte (1) mit einem Lot (11) und einem Maßstab (12) versehen ist, und daß am Wagen im Bereich der Platte (1) eine Wegstreckenmeßeinrichtung (16) vorgesehen ist.

6. Vorrichtung nach Anspruch 5, dadurch gekennzeichnet, daß die Wendel der Lichtquelle (2) in der Ebene einer Oberfläche der Platte (1) angeordnet ist.

7. Vorrichtung nach Anspruch 5, dadurch gekennzeichnet, daß die Tragfläche (8) ein die Kamera (6) und die Platte (1) fest miteinander verbindendes Gestänge ist.

8. Vorrichtung nach Anspruch 5, dadurch gekennzeichnet, daß das Lot ein elektronisches Lot ist.

9. Vorrichtung nach Anspruch 5, dadurch gekennzeichnet, daß an der der Kamera (6) zugewandten Plattenseite ein Maßstab (12) angeordnet ist.

10. Vorrichtung nach Anspruch 5, dadurch gekennzeichnet, daß die Platte (1)aus transparentem oder durcnscheinendem Material, vorzugsweise Kunststoff, ist.

11. Vorrichtung nach Anspruch 5, dadurch gekennzeichnet, daß in der Platte (1) mehrere gegen die Kamera (6) gerichtete Lichtquellen (2) angeordnet sind.

12. Vorrichtung nach Anspruch 5, dadurch gekennzeichnet, daß die Wegstreckenmeßeinrichtung (15) eine am Vorderrad (4) des Wagens angeordnete Zähleinrichtung ist.

13. Vorrichtung nach Anspruch 5, dadurch gekennzeichnet, daß der Wagen mit einem separaten Zählrad versehen ist.

14. Vorrichtung nach Ansprucn 5, dadurch gekennzeichnet, daß die Platte (1) am Wagen über eine Kippvorrichtung (15) kippbar angeordnet ist.

## Claims

1. Method for measuring the cross-sections of a cavity such as a tunnel or gallery or the like, a light plane being generated and its reflections at the walls of the cavity being recorded by a camera (6) directed onto the light plane and arranged in a fixed position with respect to the latter, characterized in that the light plane defining a profile plane is radiated coplanar to a surface (1) and additionally the cavity extending from the profile plane in the direction of the camera (6) is illuminated, in that a reference beam is used, preferably a laser beam, which determines the travel of progressive measurements and supplies a reference point (14) on the surface (1), in that the distance of the light plane from a predetermined starting point, preferably the source (17) of the reference beam, is continuously measured via a counting device (16) and at preselected intervals via a distance measuring device, and in that the light plane, the reference point (14), a plumbline (11), a scale (12) for determining the image scale and the counting device are recorded simultaneously by the camera (6).

2. Method according to Claim 1, characterized in that a perpendicular marking (11) is arranged in the region of the surface (1) and the former is recorded by the camera.

3. Method according to Claim 1, characterized in that, during the recording, the light plane is moved along the longitudinal axis (A) of the cavity to be measured.

4. Method according to Claims 1 and 3, characterized in that the displacement of the light plane is interrupted at various time intervals and the position of the light plane with respect to a predetermined starting point is measured accurately.

5. Device for carrying out the method according to one of Claims 1 to 4, having a light sectioning device consisting of at least one plate (1) and at least one light source (2) and a camera (6) directed onto the plate (1), characterized in that both the plate (1) and the camera (6), preferably a video camera, are arranged on a carriage which can be moved in the axial direction (A) of the cavity and has a bearing surface (8) and at least one front wheel and one rear wheel (4, 5) in each case, in that the light source (2) is arranged in an aperture (3) of the plate (1) and is directed onto the camera (6), in that the light source (2) is sealed off in a light-tight manner on the surface, of the plate (1), averted from the camera (6), in that a further light source (17) arranged in the gallery is provided for generating a reference beam directed onto the plate (1), in that the plate (1) is provided with a plumbline (11) and a scale (12), and in that a travel measuring device (16) is provided on the carriage in the region of the plate (1).

6. Device according to Claim 5, characterized in that the filament of the light source (2) is arranged in the plane of one surface of the plate (1).

7. Device according to Claim 5, characterized in that the bearing surface (8) is a linkage connecting the camera (6) and the plate (1) firmly to each other.

8. Device according to Claim 5, characterized in that the plumbline is an electronic plumbline.

9. Device according to Claim 5, characterized in that a scale (12) is arranged on the side of the plate facing the camera (6).

10. Device according to Claim 5, characterized in that the plate (1) is made out of transparent or translucent material, preferably plastic.

11. Device according to Claim 5, characterized in that a plurality of light sources (2) is arranged in the plate (1) and directed towards the camera (6).

12. Device according to Claim 5, characterized in that the travel measuring device (16) is a counting device arranged on the front wheel (4) of the carriage.

13. Device according to Claim 5, characterized in that the carriage is provided with a separate counting wheel.

14. Device according to Claim 5, characterized in that the plate (1) is arranged on the carriage so as to be able to be tilted by means of a tilting device (15).

## Revendications

1. Procédé de mesure de sections d'une cavité du genre tunnel, galerie ou analogue, dans lequel on produit un plan lumineux et enregistre les réflexions de celui-ci sur les parois de la cavité au moyen d'une caméra (6) dirigée sur le plan lumineux et fixe par rapport à celui-ci, caractérisé par le fait qu'on fait rayonner le plan lumineux, qui définit un plan de profil, coplanairement à une surface (1) et en plus éclaire la cavité s'étendant du plan de profil en direction de la caméra (6), qu'on utilise un faisceau de référence déterminant le chemin de mesures progressives, de préférence un faisceau laser, qui fournit sur la surface (1) un point de référence (14), qu'on mesure le distance entre le plan lumineux et un point de départ fixé à l'avance, de préférence la source (17) du faisceau de référence, en permanence au moyen d'un dispositif de comptage (16) et à des intervalles choisis à l'avance au moyen d'un télémètre, et qu'on enregistre simultanément au moyen de la caméra (6) le plan lumineux, le point de référence (14), un fil à plomb (11), une échelle (12) pour la détermination de l'échelle de l'image et le dispositif de comptage.

2. Procédé selon la revendication 1, caractérisé par le fait qu'on place une marque verticale (11) dans la zone de la surface (1) et l'enregistre au moyen de la caméra.

3. Procédé selon la revendication 1, caractérisé par le fait que, pendant l'enregistrement, on déplace le plan lumineux le long de l'axe longitudinal (A) de la cavité à mesurer.

4. Procédé selon les revendications 1 et 3, caractérisé par le fait que, à différents intervalles de temps, on interrompt le déplacement du plan lumineux et mesure exactement la position de celui-ci par rapport à un point de départ fixé à l'avance.

5. Appareil pour la mise en oeuvre du procédé selon l'une des revendications 1 à 4, comportant un interrupteur de lumière constitué d'au moins une plaque (1), au moins une source lumineuse (2) et une caméra (6) dirigée sur la plaque (1), caractérisé par le fait que la plaque (1) et la caméra (6), de préférence une caméra vidéo, sont placées sur un chariot mobile dans la direction axiale (A) de la cavité qui a une surface support (8) et au moins une roue avant (4) et au moins une roue arrière (5), que la source lumineuse (2) est placée dans une ouverture (3) de la plaque (1) et dirigée sur la caméra (6), que la source lumineuse (2) est couverte de manière étanche à la lumière sur la face de la plaque (1) opposée à la caméra (6), qu'une autre source lumineuse (17) placée dans la galerie est prévue pour la production d'un faisceau de référence dirigé sur la plaque (1), que la plaque (1) est pourvue d'un fil à plomb (11) et d'une échelle (12) et qu'un odomètre (16) est prévu sur le chariot dans la zone de la plaque (1).

6. Appareil selon la revendication 5, caractérisé par le fait que le filament de la source lumineuse (2) est placé dans le plan d'une face de la plaque (1).

7. Appareil selon la revendication 5, caractérisé par le fait que la surface support (8) est une tringlerie reliant rigidement l'une à l'autre la caméra (6) et la plaque (1).

8. Appareil selon la revendication 5, caractérisé par le fait que le fil à plomb est un fil à plomb électronique.

9. Appareil selon la revendication 5, caractérisé par le fait qu'une échelle (12) est placée sur la face de la plaque dirigée vers la caméra (6).

10. Appareil selon la revendication 5, caractérisé par le fait que la plaque (1) est en matière, de préférence en matière plastique, transparente ou translucide.

11. Appareil selon la revendication 5, caractérisé par le fait que dans la plaque (1) sont placées plusieurs sources lumineuses (2) dirigées vers la caméra (6).

12. Appareil selon la revendication 5, caractérisé par le fait que l'odomètre (15) est un dispositif de comptage placé sur la roue avant (4) du chariot.

13. Appareil selon la revendication 5, caractérisé par le fait que la chariot est pourvu d'une roue de comptage séparée.

14. Appareil selon la revendication 5, caractérisé par le fait que la plaque (1) est montée basculante sur le chariot au moyen d'un dispositif de basculement (15).
